# EUROPEAN PATENT APPLICATION

(11) **EP 4 625 665 A1**
(43) Date of publication of application: **01.10.2025**
(21) Application number: 24767421.1
(22) Date of filing: 06.03.2024
(51) Int. Cl.: H01M 50/383, H01M 50/367, H01M 50/204

(54) **FLAME RELEASE PREVENTION VENTING DEVICE AND BATTERY PACK INCLUDING SAME**

(30) Priority: 08.03.2023 KR 20230030768
(71) Applicant: LG Energy Solution, Ltd., Seoul 07335 (KR)
(72) Inventor: LEE, Jung-Hoon, Daejeon 34122 (KR); JUNG, Hye-Mi, Daejeon 34122 (KR)
(74) Representative: Plasseraud IP
(86) International application number: PCT/KR2024/002905
(87) International publication number: WO 2024/186133

(57) **Abstract**

A venting device according to the present disclosure includes an inlet, an outlet, and a fluid flow path from the inlet to the outlet, and the fluid flow path is configured to be bent to block movement of flame.

## Description

### TECHNICAL FIELD

The present disclosure relates to a venting device, and more specifically, it relates to a venting device capable of preventing flame from being released outside and discharging gas when ignition occurs in a battery module or battery pack.

The present application claims priority to Korean Patent Application No. 10-2023-0030768 filed on March 08, 2023 in the Republic of Korea, the disclosures of which are incorporated herein by reference.

### BACKGROUND ART

Recently, secondary batteries have been applied to various devices. For example, secondary batteries are being widely used for electric vehicles, hybrid electric vehicles, and the like, which are presented as alternatives to existing gasoline and diesel vehicles, as well as energy sources for multi-functional small products such as wireless mobile devices or wearable devices.

In general, each of commercialized secondary batteries has an operation voltage of approximately 2.5V to 4.5V. Therefore, for an electric vehicle or energy storage device that requires large capacity and high output, a battery module obtained by connecting multiple secondary batteries in series and/or parallel and a battery pack obtained by connecting the battery modules in series and/or parallel are configured and used as an energy source.

As described above, as secondary batteries are used as large-capacity and high-output energy sources, securing the safety of the battery pack has become an important issue.

Since secondary batteries operate based on the fundamental mechanism using electrochemical reactions, they are likely to chemically explode according to various causes such as a strong external impact, short circuits between electrodes, or electrolyte leakage. For example, if an overcurrent flows through a secondary battery, the internal temperature of the secondary battery rapidly increases. A rapid rise in temperature may cause a decomposition reaction of the electrolyte to generate gas. In this case, swelling in which the battery case swells due to an increase in pressure therein may occur, and if this worsens, the secondary battery may ignite or explode.

Meanwhile, in the battery module or battery pack, a large number of secondary batteries are accommodated in a sealed module case or pack case, so the gas generated when the secondary battery ignites may increase the internal pressure, leading to collapse or serial explosion. Therefore, the conventional battery module or battery pack (see KR Unexamined Patent Publication No. 10-2021-0091514) prevents an increase in pressure by installing a venting device, which is opened at a predetermined pressure, in the module case or pack case, thereby discharging the gas to the outside.

However, in the conventional venting device, flame and high-temperature particles are also discharged when gas is discharged to the outside. In particular, if flame is released to the outside of the module case or pack case, fire is more likely to spread to other battery modules or structures around the pack case. Accordingly, a venting device is required to prevent release of flame during gas venting.

### DISCLOSURE

### Technical Problem

The present disclosure has been designed to solve the problems of the related art, and therefore the present disclosure is directed to providing a venting device capable of discharging gas while preventing flame from being released to the outside.

The technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a venting device may include an inlet, an outlet, and a fluid flow path from the inlet to the outlet, wherein the fluid flow path may be configured to be bent to block movement of flame.

The venting device may include: an inlet vent unit having the inlet and configured to guide flow of gas to a direction intersecting the inlet; and an outlet vent unit having the outlet, surrounding an outer side of the inlet vent unit, and configured such that the flow of gas from the inlet vent unit to the outlet is bent at least once.

The inlet vent unit may include: a base portion having the inlet in the center thereof; a blocking disk portion spaced apart from the base portion and located to face the inlet so as to block gas and flame; and an inlet side-wall portion having an opening and configured to connect an edge of the base portion and an edge of the blocking disk portion.

The inlet side-wall portion may include a plurality of openings, and partitions may be provided between the plurality of openings.

The inlet vent unit may include a gas permeation prevention film configured to cover the opening.

The gas permeation prevention film may be made of a material that is melted by heat.

The outlet vent unit may include: a vent disk portion spaced apart from the blocking disk portion and having the outlet opposite to the inlet with the blocking disk portion interposed therebetween; and an outlet side-wall portion spaced apart from the inlet side-wall portion, surrounding a circumference of the inlet side-wall portion, and connected to the vent disk portion perpendicular thereto.

The outlet side-wall portion may include a discharge pocket configured by a recessed inner surface.

The vent disk portion may be larger than the blocking disk portion, and the outlet may have a smaller diameter than the blocking disk portion.

The inlet vent unit may include a spacer protruding from the blocking disk portion toward the vent disk portion.

The outlet vent unit may include a base connection portion that is connected to the outlet side-wall portion perpendicular thereto and is press-fitted to or caught by the inlet vent unit.

The blocking disk portion may include a plurality of protrusions protruding from a surface opposite to the inlet.

The plurality of protrusions may have an arc shape.

According to another aspect of the present disclosure, there is provided a battery module including the venting device described above.

According to another aspect of the present disclosure, there is provided a battery pack including the venting device described above.

### Advantageous Effects

According to one aspect of the present disclosure, there may be provided a venting device capable of discharging gas without release of flame to the outside.

The venting device according to one aspect of the present disclosure is configured such that a flow path has multiple bent portions, so it has high resistance to flow of flame/sparks. Accordingly, the flame/sparks may be extinguished inside the venting device or may not be released to the outside.

In addition, according to another aspect of the present disclosure, a discharge pocket is applied to the venting device to prevent blockage of the flow path.

In addition, according to another aspect of the present disclosure, since a gas permeation prevention film is applied to the fluid flow path between the outlet and inlet to prevent air (oxygen) from passing through the venting device in a normal state, it is possible to prevent, at the time of initial ignition of the structure (e.g., the battery module or battery pack) to which the venting device is applied, air from flowing from the outside of the structure to the inside thereof.

The effects obtainable from the present disclosure are not limited to the above-mentioned effects, and other effects not mentioned above will be clearly understood by those skilled in the art from the description of the invention described below.

### DESCRIPTION OF DRAWINGS

FIG. 1 is a perspective view schematically illustrating a battery pack to which a venting device is applied according to an embodiment of the present disclosure.
FIG. 2 is a perspective view schematically illustrating a venting device according to an embodiment of the present disclosure.
FIG. 3 is a partially exploded perspective view of the venting device in FIG. 2.
FIG. 4 is an exploded perspective view of the inlet vent unit in FIG. 3.
FIG. 5 is a longitudinal cross-sectional view of the venting device taken along line A-A' in FIG. 2.
FIG. 6 is a transverse cross-sectional view of the venting device taken along line B-B' in FIG. 2.
FIG. 7 is a perspective view schematically illustrating a venting device according to another embodiment of the present disclosure.
FIG. 8 is a partially exploded perspective view of the venting device in FIG. 7.
FIG. 9 is a longitudinal cross-sectional view of the venting device taken along line C-C' in FIG. 7.
FIG. 10 is a partially enlarged view of area "J1" in FIG. 9.
FIG. 11 is a diagram corresponding to FIG. 5, which shows a modification of the venting device in FIG. 5.
FIG. 12 is a partially enlarged view of FIG. 11.
FIG. 13 is a diagram corresponding to FIG. 5, which shows another modification of the venting device in FIG. 5.
FIG. 14 is a partially enlarged view of FIG. 13.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

In addition, descriptions of related known functions or configurations, which may obscure the subject matter of the present disclosure, will be omitted.

Embodiments of the present disclosure are presented to those skilled in the art for further describing the present disclosure, so the shapes and sizes of respective elements in the attached drawings may be exaggerated, omitted, or simplified for convenience of explanation and clarification thereof. Accordingly, the sizes of respective elements do not entirely reflect their actual sizes.

A venting device to be described below may indicate a device that discharges, when gas is generated in a closed structure, the gas to the outside of the structure, thereby relieving an increase in internal pressure of the structure. The venting device may be installed in a pack case 21 of a battery pack 20 or a module housing of a battery module.

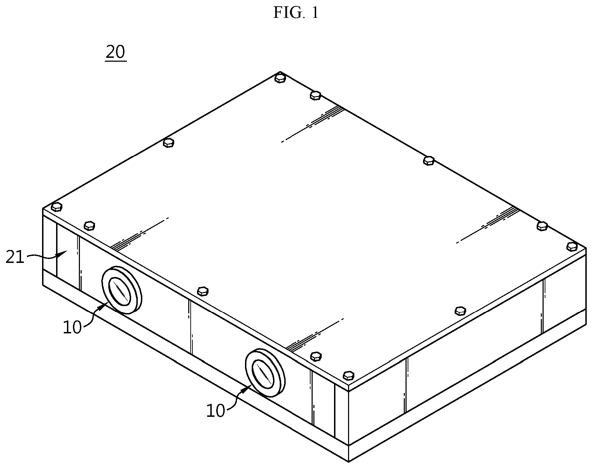

Specifically, for example, the venting device 10 may be installed on one wall of the pack case 21, as shown in FIG. 1. The pack case 21 may have a gas venting hole (not shown) where the venting device 10 is to be installed, and an inlet K1 of the venting device 10 may be configured to communicate with the gas venting hole. Accordingly, when ignition occurs inside the battery pack, gas may be discharged to the outside of the battery pack 20 through the venting device 10.

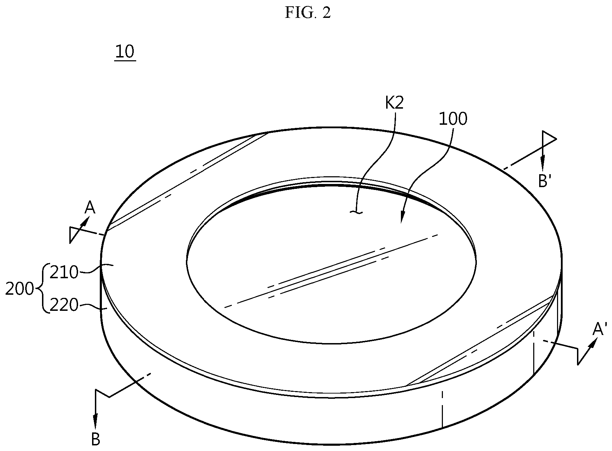

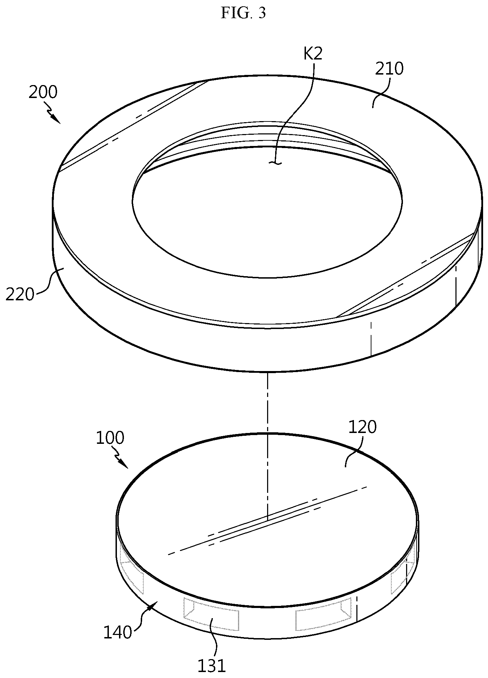

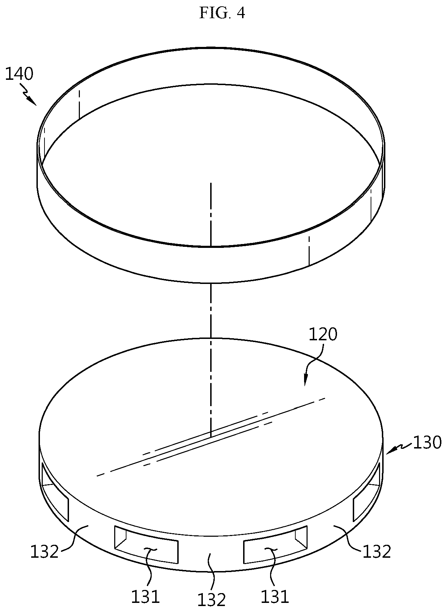

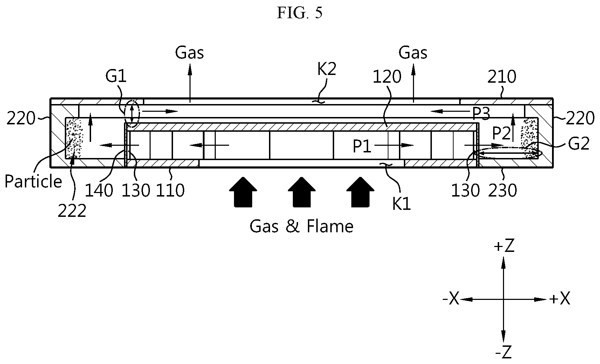

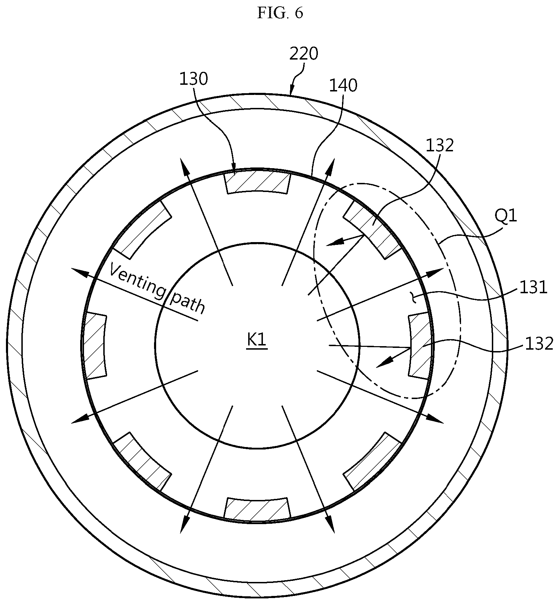

FIG. 2 is a perspective view schematically illustrating a venting device according to an embodiment of the present disclosure, FIG. 3 is a partially exploded perspective view of the venting device in FIG. 2, FIG. 4 is an exploded perspective view of the inlet vent unit in FIG. 3, FIG. 5 is a longitudinal cross-sectional view of the venting device taken along line A-A' in FIG. 2, and FIG. 6 is a transverse cross-sectional view of the venting device taken along line B-B' in FIG. 2.

Referring to these drawings, the venting device 10 according to an embodiment of the present disclosure includes an inlet K1, an outlet K2, and a fluid flow path P1 to P3 through which gas may move from the inlet K1 to the outlet K2.

In particular, the venting device 10 according to an embodiment of the present disclosure is configured such that the fluid flow path P1 to P3 is bent one or more times. For example, as shown in FIG. 5, the venting device is configured such that the fluid flow path P1 to P3 is bent with respect to the inflow direction of the gas entering the inlet K1 from the pack case 21. Therefore, the gas passes through the venting device 10 and is discharged to the outside by passing through the fluid flow path P1 to P3 that is bent multiple times, as indicated by "P1", "P2", and "P3" in FIG. 5. In this case, whenever flame is blocked at positions where the fluid flow path P1 to P3 is bent, the straight mobility and the intensity of the flame are significantly reduced.

As will be described in detail later, the venting device 10 according to the present disclosure has the fluid flow path P1 to P3 with very high resistance. Therefore, gas may pass through the venting device 10, but the flame may be extinguished inside the venting device 10 or may not be easily release to the outside. Furthermore, when gas is moving through the venting device 10 according to the present disclosure, strong vortices may be produced inside the venting device 10, and these strong vortices facilitate extinguishing of sparks or flame and make it more difficult for the same to move.

Specifically, referring to FIGS. 2 and 3, the venting device 10 according to an embodiment of the present disclosure may include an inlet vent unit 100 and an outlet vent unit 200.

The inlet vent unit 100 may have an inlet K1 and may be configured to guide the flow of gas to a direction intersecting the inlet K1. For example, as shown in FIG. 3, the inlet vent unit 100 is configured in the form of a cylinder, and has an inlet K1 on the lower side of the inlet vent unit 100 and a closed upper side such that gas introduced through the inlet K1 is guided to a direction intersecting the inlet K1. That is, as shown in FIG. 5, gas or flame may enter the inner space of the inlet vent unit 100 through the inlet K1. However, the side facing the inlet K1 is blocked in the +Z direction, so the gas flow is guided to a direction that intersects the inlet K1. At this time, the flame is initially blocked and external release may be prevented.

Describing primary configurations of the inlet vent unit 100, as shown in FIGS. 4 and 5, the inlet vent unit 100 includes a base portion 110 having the inlet K1 in the center, a blocking disk portion 120 that is spaced apart from the base portion 110 and located to face the inlet K1 to block gas and flame, and an inlet side-wall portion 130 that has an opening 131 and connects the edge of the base portion 110 and the edge of the blocking disk portion 120.

The base portion 110 and the blocking disk portion 120 may constitute the lower and upper plates of the cylindrical inlet vent unit 100 in FIG. 3, and the inlet side-wall portion 130 may constitute the cylindrical side surface or thickness surface.

For reference, the inlet K1 of the base portion 110 may be disposed in communication with the gas venting hole (not shown) of the pack case 21, and the edge of the base portion 110 may come into contact with and be fixed to the outer surface of the pack case 21 around the gas venting hole by bolting or the like.

The blocking disk portion 120 may be configured to have a larger area than the inlet K1 of the base portion 110. Since the area of the blocking disk portion 120 is configured to be larger than the diameter of the inlet K1, the flame entering through the inlet K1 may be prevented from being released to the outside, and the flow of gas and flame may be guided toward the inlet side-wall portion 130 that intersects the inlet K1.

As shown in FIG. 4, the inlet side-wall portion 130 includes a plurality of openings 131 formed along the circumferential direction of the inlet vent unit 100 and a plurality of partitions 132 formed between the plurality of openings 131. The openings 131 and the partitions 132 may be alternately provided along the circumferential direction of the inlet vent unit 100.

As described above, since the opening 131 is provided in the inlet side-wall portion 130, as shown in FIG. 5, gas may enter the inner space of the inlet vent unit 100 through the inlet K1 and exit to the outside of the inlet vent unit 100 through the opening 131.

At this time, the partitions 132, such as the area indicated by "Q1" in FIG. 6, may act as an obstacle that impedes the movement of the flame. In addition, as the gas may collide with the surrounding partition when flowing into the opening 131 to produce a strong vortex, and the flame may be extinguished or stagnate due to the strong vortex.

The inlet vent unit 100 may include a gas permeation prevention film 140 that covers the opening 131. The gas permeation prevention film 140 normally plays the role of blocking air (oxygen) from passing through the opening 131.

Referring to FIGS. 3 and 4, the gas permeation prevention film 140 may be attached to the surface of the inlet side-wall portion 130 along the circumference of the inlet side-wall portion 130 to cover all openings 131. This gas permeation prevention film 140 may be configured to have a width and a length corresponding to the circumference of the inlet side-wall portion 130. As an alternative, only the openings 131 may be covered using several pieces of gas permeation prevention film 140 having a size corresponding to the opening 131.

The gas permeation prevention film 140 may be made of a material that is melted by heat. For example, an ethylene vinyl alcohol copolymer (EVOH) film may be used as the gas permeation prevention film 140.

As described above, since the opening 131 of the inlet vent unit 100 is blocked by the gas permeation prevention film 140, moisture and other foreign substances may be prevented from flowing from the outside of the battery pack 20 to the inside of the battery pack 20 (see FIG. 1). In addition, if air (oxygen) flows into the inside of the battery pack 20 at the beginning of ignition of the battery pack 20, combustion may proceed very quickly. Since the gas permeation prevention film 140 is applied to the venting device 10 in the present disclosure, air (oxygen) does not flow from the outside to the inside of the battery pack 20 at the beginning of ignition of the battery pack 20. This may delay the combustion of the battery pack 20.

Meanwhile, if the ignition of the battery pack 20 intensifies so that a large amount of gas and flame is generated inside, the gas permeation prevention film 140 may be thermally melted by the gas and flame, so that the openings 131 of the inlet side-wall portion 130 may be opened, and at this time, the gas may pass through the venting device 10 and be discharged to the outside of the battery pack 20.

That is, the venting device 10 according to the present disclosure is configured such that the gas permeation prevention film 140 is removed by heat, when gas or flame is generated, to open the openings 131, allowing gas to pass therethrough, and such that the openings 131 are closed in a normal state to block the air (oxygen) from passing therethrough.

The outlet vent unit 200 has an outlet K2, surrounds the outer side of the inlet vent unit 100, and is configured such that the flow of gas is bent at least once from the inlet vent unit 100 to the outlet K2.

For example, as shown in FIGS. 2 and 3, the outlet vent unit 200 may have an outlet K2 on the upper side of the outlet vent unit 200 and may be configured to surround the entire outer circumference of the inlet vent unit 100 and a portion of the upper side thereof. In addition, the outlet vent unit 200 and the inlet vent unit 100, when assembled with each other, have a predetermined gap between the inner surface of the outlet vent unit 200 and the outer surface of the inlet vent unit 100. The gap may provide a fluid flow path P2 and P3 in which the flow of gas is bent one or more times between the outer side of the inlet vent unit 100 and the inner side of the outlet vent unit 200.

That is, as shown in FIG. 5, when gas enters the space between the inlet vent unit 100 and the outlet vent unit 200 through the opening 131 of the inlet vent unit 100, since the space is blocked in the ±X-axis directions (or ±Y directions) and the -Z-axis direction, the gas is guided to a direction intersecting the opening 131 and the flow of gas is bent again on the upper side of the outlet vent unit 200. Accordingly, even the remaining flame that has passed through the inlet vent unit 100 may be blocked, thereby preventing the flame from being released outside.

Describing the outlet vent unit 200 in more detail with reference to FIGS. 2, 3, and 5, the outlet vent unit 200 includes a vent disk portion 210 and an outlet side-wall portion 220.

The vent disk portion 210 has the outlet K2 in its center and is disposed to face and be spaced apart (see G1) from the blocking disk portion 120 of the inlet vent unit 100. The outlet K2 is located opposite to the inlet K1 of the inlet vent unit 100 with the blocking disk portion 120 interposed therebetween. Accordingly, in the venting device 10 according to an embodiment of the present disclosure, although the inlet K1 and the outlet K2 are located in the same axis direction (the Z-axis direction), the blocking disk portion 120 is interposed therebetween, so that outflow of flame may be blocked and gas may move by bypassing the blocking disk portion 120.

The vent disk portion 210 may be configured to be larger than the blocking disk portion 120, and the outlet K2 may have a smaller diameter than the blocking disk portion 120. That is, as shown in FIGS. 2 and 5, since the vent disk portion 210 is larger than the blocking disk portion 120, and since the outlet K2 is smaller than the blocking disk portion 120, the edge of the blocking disk portion 120 is obscured by the inner edge of the vent disk portion 210 so as not to be exposed. In this case, for example, in FIG. 5, even if the flame is directed in the +Z direction at the position outside the edge of the blocking disk portion 120, it is blocked by the inner edge of the vent disk portion 210 and is not released to the outside of the venting device 10.

The outlet side-wall portion 220 may be connected to the vent disk portion 210 perpendicular thereto to be spaced apart (see G2) from the inlet side-wall portion 130 and surround the circumference of the inlet side-wall portion 130. This outlet side-wall portion 220 may function as a wall that blocks the gas and flame discharged from the opening 131 of the inlet side-wall portion 130 and guides the flow of gas toward the vent disk portion 210.

In addition, the outlet side-wall portion 220 includes a discharge pocket 222 formed by the recessed inner surface thereof. Preferably, the discharge pocket 222 may be provided at a position facing the opening 131 of the inlet side-wall portion 130.

When ignition occurs inside the battery pack 20, particles (e.g., electrode pieces detached from the electrode assembly and other fire residues) as well as gas and flame may flow into the venting device 10. In this case, if the particles accumulate inside the venting device 10, the fluid flow path P1 to P3 may be blocked, so that the venting device 10 may not function properly.

To prevent this, in the venting device 10 according to an embodiment of the present disclosure, the width (in the Z-axis direction) of a portion of the fluid flow path P1 to P3 between the inlet side-wall portion 130 and the outlet side-wall portion 220 is configured to be larger than those of other portions of the fluid flow path P1 to P3, as shown in FIG. 5. In addition, since the venting device 10 is provided with the discharge pocket 222 in the outlet side-wall portion 220, the fluid flow path P1 to P3 is not likely to be blocked.

In other words, the venting device 10 according to the present disclosure is configured such that the gap G2 between the inlet side-wall portion 130 and the outlet side-wall portions 220 where particles are relatively easy to accumulate is greater than the gap G1 between the blocking disk portion 120 and the vent disk portion 210 and such that the recessed discharge pocket 222 is further provided on the inner surface of the outlet side-wall portion 220 so that particles may accumulate in the discharge pocket 222.

According to the above configuration, particles may collect in the largest space inside the venting device, thereby lowering the risk of blockage of the fluid flow path and preventing high-temperature particles, which may lead to ignition outside the battery pack, from being released to the outside.

Referring to FIG. 5, the outlet vent unit 200 may further include a base connection portion 230. The base connection portion 230 may be connected to the outlet side-wall portion 220 perpendicular thereto and may be connected to the base portion 110 of the inlet vent unit 100 on the same plane.

This base connection portion 230 may serve to support the circumference of the inlet vent unit 100 and hold the inlet vent unit 100, and serve to block the gas passing through the opening 131 of the inlet side-wall portion 130 from moving in the -Z-axis direction.

However, the base connection portion 230 may be omitted in some cases. For example, when the venting device 10 is fixed to the outer surface of the pack case 21, in the case where the gas venting hole of the pack case 21 is smaller than the base portion 110 of the inlet vent unit and where the flow of gas in the -Z-axis direction is blocked between the inlet side-wall portion 130 and the outlet side-wall portion 220 by the outer surface of the pack case 21, the base connection portion 230 may be omitted.

According to the configuration and operation of the venting device 10 according to an embodiment of the present disclosure described above, when a thermal event occurs in the battery module or battery pack 20, gas may be allowed to pass, but flame may dissipate or may be restricted from moving inside the venting device 10 so that it may not be released to the outside. In addition, since the venting device 10 includes the discharge pocket 222, outflow of high-temperature particles to the outside and blockage of the flow path P1 to P3 may be prevented. In addition, since the venting device 10 includes a gas permeation prevention film 140, it is possible to prevent, at the time of initial ignition of the structure (e.g., the battery module or battery pack 20) to which the venting device 10 is applied, air (oxygen) from flowing from the outside of the structure to the inside thereof.

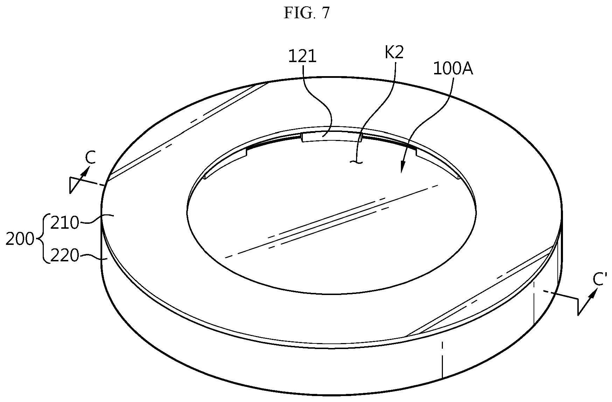

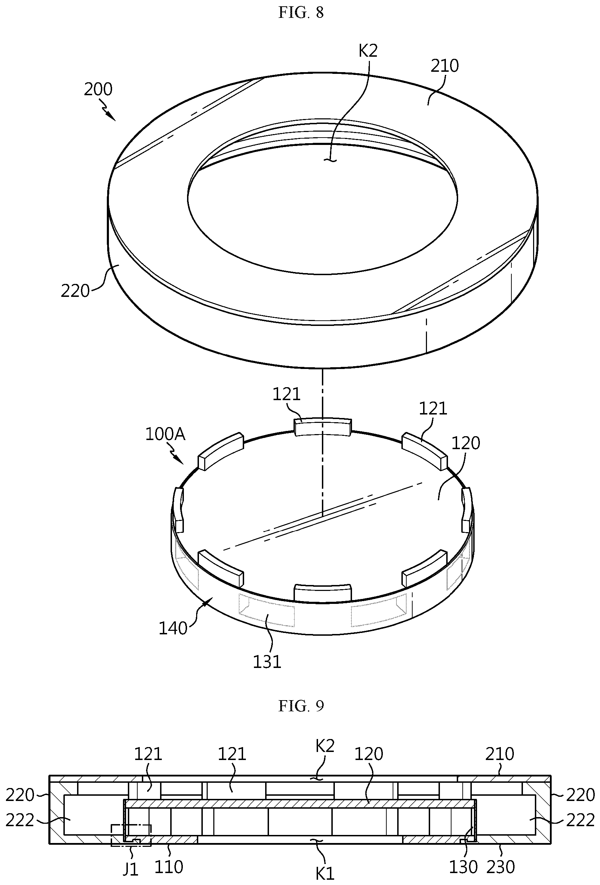

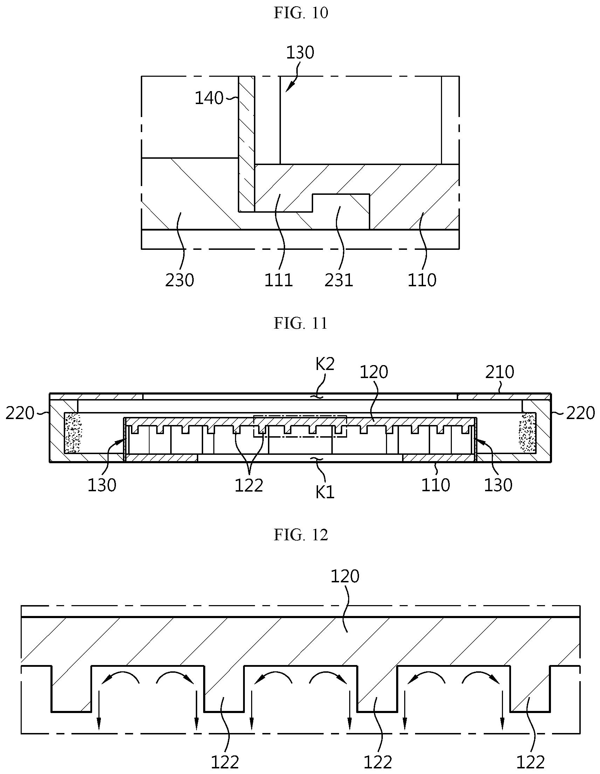

FIG. 7 is a perspective view schematically illustrating a venting device 10 according to another embodiment of the present disclosure, FIG. 8 is a partially exploded perspective view of the venting device 10 in FIG. 7, FIG. 9 is a longitudinal cross-sectional view of the venting device 10 taken along line C-C' in FIG. 7, and FIG. 10 is a partially enlarged view of area "J1" in FIG. 9.

Next, a venting device 10 according to another embodiment of the present disclosure will be described with reference to FIGS. 7 to 10.

The same reference numerals as those in the above-described embodiment indicate the same members, and redundant descriptions of the same members will be omitted and the description will focus on differences from the above-described embodiment.

The venting device 10 according to another embodiment of the present disclosure is different from the venting device 10 according to the above-described embodiment in that the inlet vent unit 100A further includes a spacer 121 and that the base connection portion 230 and the base portion 110 are connected in a different manner.

Referring to FIGS. 7 to 9, in the present embodiment of the present disclosure, the spacer 121 may be configured to protrude from the blocking disk portion 120 toward the vent disk portion 210. Here, the protrusion length of the spacer 121 may correspond to the gap G1 between the blocking disk portion 120 and the vent disk portion 210. In addition, preferably, the spacers 121 may be located in the edge area of the blocking disk portion 120 and may be provided at regular intervals along the circumferential direction of the blocking disk portion 120.

In the venting device 10 according to the above-described embodiment, when a thermal event occurs in the battery pack 20, gas and flame directed from the inlet K1 to the blocking disk portion 120 applies continuous and strong impacts to the blocking disk portion 120. As a result, the inlet vent unit 100 may be pushed in the +Z-axis direction relative to the outlet vent unit 200, and if the blocking disk portion 120 and the vent disk portion 210 come into contact with each other according thereto, the fluid flow path P1 to P3 may be blocked. Furthermore, if the pressure of gas and flame is very severe, the blocking disk portion 120 may fall off from the inlet vent unit 100.

However, according to the present embodiment of the present disclosure, when the pressure of gas and flame acts on the blocking disk portion 120 as described above, the spacers 121 serve to prevent the inlet vent unit 100 from moving in the +Z-axis direction relative to the outlet vent unit 200, so that the gap between the blocking disk portion 120 and the vent disk portion 210 may remain constant. Therefore, compared to the above-described embodiment, in the present embodiment of the present disclosure, the fluid flow path P1 to P3 may be maintained more stably while the gas passes through the venting device 10.

In addition, the outlet vent unit 200 according to another embodiment of the present disclosure, as shown in FIGS. 9 and 10, includes a base connection portion 230 that is connected to the outlet side-wall portion 220 perpendicular thereto and is press-fitted to or caught by the inlet vent unit 100A. For example, the base connection portion 230 may have an engagement member 231, and the base portion 110 of the inlet vent unit 100A may have an engagement recess 111 capable of being engaged with and released from the engagement member.

That is, as shown in FIG. 10, the base portion 110 of the inlet vent unit 100 and the base connection portion 230 of the outlet vent unit 200 are configured to be engaged with each other by fitting, thereby improving assembly, fixation, and airtightness between the inlet vent unit 100 and the outlet vent unit 200.

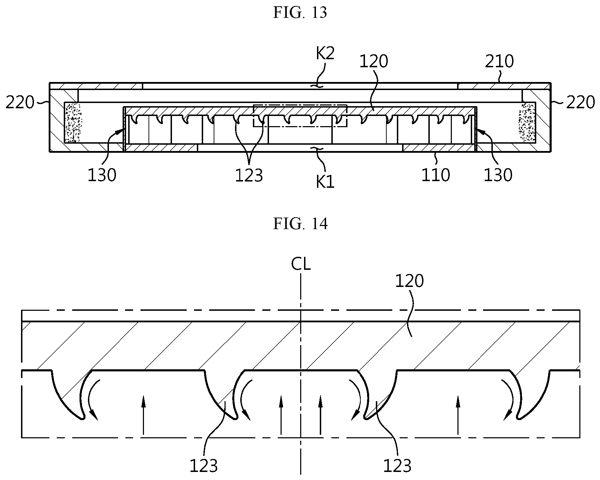

FIG. 11 is a diagram corresponding to FIG. 5, which shows a modification of the venting device 10 in FIG. 5, FIG. 12 is a partially enlarged view of FIG. 11, FIG. 13 is a diagram corresponding to FIG. 5, which shows another modification of the venting device 10 in FIG. 5, and FIG. 14 is a partially enlarged view of FIG. 13.

Next, variations of the blocking disk in the venting device 10 according to the present disclosure will be briefly described with reference to FIGS. 11 to 14.

The blocking disk portion 120 of the inlet vent unit 100 may include a plurality of protrusions 122 and 123 protruding from the surface opposite to the inlet K1. The plurality of protrusions 122 and 123 may be provided on the entire surface of the blocking disk portion 120 so as to be spaced apart from each other.

For example, as shown in the implemented configuration in FIG. 11, the protrusion 122 may be configured in a square shape. Alternatively, as shown in the implemented configuration in FIG. 13, the protrusion 123 may be configured in an arc shape.

Here, the arc shape may be configured to be open toward the imaginary center line CL, bisecting the length of the blocking disk portion 120, and to be closed toward the edge of the blocking disk portion 120.

As shown in FIG. 12 or 14, these protrusions 122 and 123 may serve to prevent flame or particles from moving along the surface of the blocking disk and induce them to return to the inlet K1 (in the -Z-axis direction). In addition, the plurality of protrusions 122 and 123 may be effective in increasing the rigidity of the blocking disk portion 120. In addition, the plurality of protrusions 122 and 123 may be effective in generating a vortex that promotes the extinction of the flame.

Meanwhile, although not shown for convenience of drawing, a battery module according to the present disclosure may include the venting device 10 described above. In addition, the battery module may further include one or more battery cells and a module housing having an inner space capable of accommodating one or more battery cells. The venting device 10 may be fixed to one side of the module housing.

The battery pack 20 according to the present disclosure may include the venting device 10 described above, as shown in FIG. 1. The battery pack 20 may further include one or more battery modules and a pack case 21 having an inner space capable of accommodating one or more battery modules.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

Meanwhile, although terms indicating directions such as upward, downward, left, right, forward, and backward directions are used in this specification, it is obvious to those skilled in the art that these terms are only for convenience of explanation and may vary depending on the location of the target object or the location of the observer.

## Claims

1. A venting device comprising
an inlet, an outlet, and a fluid flow path from the inlet to the outlet,
wherein the fluid flow path is configured to be bent to block movement of flame.

2. The venting device according to claim 1, comprising:
an inlet vent unit having the inlet and configured to guide flow of gas to a direction intersecting the inlet; and
an outlet vent unit having the outlet, surrounding an outer side of the inlet vent unit, and configured such that the flow of gas from the inlet vent unit to the outlet is bent at least once.

3. The venting device according to claim 2,
wherein the inlet vent unit comprises:
a base portion having the inlet in the center thereof;
a blocking disk portion spaced apart from the base portion and located to face the inlet so as to block gas and flame; and
an inlet side-wall portion having an opening and configured to connect an edge of the base portion and an edge of the blocking disk portion.

4. The venting device according to claim 3,
wherein the inlet side-wall portion comprises
a plurality of openings, and partitions provided between the plurality of openings.

5. The venting device according to claim 3,
wherein the inlet vent unit comprises
a gas permeation prevention film configured to cover the opening.

6. The venting device according to claim 5,
wherein the gas permeation prevention film is made of a material that is melted by heat.

7. The venting device according to claim 3,
wherein the outlet vent unit comprises:
a vent disk portion spaced apart from the blocking disk portion and having the outlet opposite to the inlet with the blocking disk portion interposed therebetween; and
an outlet side-wall portion spaced apart from the inlet side-wall portion, surrounding a circumference of the inlet side-wall portion, and connected to the vent disk portion perpendicular thereto.

8. The venting device according to claim 7,
wherein the outlet side-wall portion comprises
a discharge pocket configured by a recessed inner surface.

9. The venting device according to claim 7,
wherein the vent disk portion is larger than the blocking disk portion, and
wherein the outlet has a smaller diameter than the blocking disk portion.

10. The venting device according to claim 7,
wherein the inlet vent unit comprises a spacer protruding from the blocking disk portion toward the vent disk portion.

11. The venting device according to claim 7,
wherein the outlet vent unit comprises a base connection portion that is connected to the outlet side-wall portion perpendicular thereto and press-fitted to or caught by the inlet vent unit.

12. The venting device according to claim 3,
wherein the blocking disk portion comprises
a plurality of protrusions protruding from a surface opposite to the inlet.

13. The venting device according to claim 12,
wherein the plurality of protrusions have an arc shape.

14. A battery module comprising the venting device according to any one of claims 1 to 13.

15. A battery pack comprising the venting device according to any one of claims 1 to 13.
